Europäisches Patentamt

(19) European Patent Office     (11) Publication number: **0 242 969**
Office européen des brevets                               **B1**

(12)                  **EUROPEAN PATENT SPECIFICATION**

(45) Date of publication of the patent specification:     (51) Int. Cl.⁴: **F16B 2/18, F16L 23/04**
     **16.08.89**

(21) Application number: **87302188.5**

(22) Date of filing: **13.03.87**

(54) **Fasteners.**

(30) Priority: **18.04.86 GB 8609568**

(73) Proprietor: **Howard S. Cooke & Co Ltd, Arrow Road, Redditch Worcestershire B98 8PA(GB)**

(43) Date of publication of application:
     **28.10.87 Bulletin 87/44**

(72) Inventor: **Cooke, Robert Seymour, 366 Station Road, Dorridge,, Solihull, West Midlands B93 8ES(GB)**

(45) Publication of the grant of the patent:
     **16.08.89 Bulletin 89/33**

(74) Representative: **Hands, Horace Geoffrey et al, LEWIS W. GOOLD & CO. Whitehall Chambers 23, Colmore Row, Birmingham B3 2BL(GB)**

(84) Designated Contracting States:
     **DE FR GB**

(56) References cited:
     **DE-U- 1 808 165**
     **DE-U- 1 808 165**
     **DE-U- 1 903 311**
     **DE-U- 1 919 385**
     **US-A- 2 331 132**

## Description

This invention relates to fasteners according to the first part of claim 1.

Various different fasteners of this general kind are known. For example it is known to turn the ends of the loop radially outwardly and aperture them, using a nut and bolt extending generally tangentially of the loop to draw the ends together. Such a fastener is cheap and simple but slow to operate and tends to apply pressure to the article clamp by the band unequally.

Another known fastener of the general kind referred to is a worm drive hose clip where the band is provided with a series of parallel slots or recesses in a tail portion which extends through a housing fixed to the other end of the band, and a screw carried in the housing engages in those slots so that rotation of the screw contracts or expands the band. A disadvantage of fasteners of that kind is (again) the slow operation and a further disadvantage is that the band has to be of a certain thickness and stiffness to carry the slots or the like which again makes it likely that pressure is applied unequally to the clamped object.

In DE-U 1 808 165 a toggle type fastener is used to contract the looped band, having a hook provided near one end of the looped band and a lever and hasp bail located on attachment lugs near the other end of the band. This provides quick action to contract the band, but the pressure applied by the toggle fastener is every unequal which may also distort the article being clamped.

The object of the invention is to provide an improvement of the known fastener. According to the invention, we use a fastener characterised by the features stated in the second part of claim 1. This distributes the pressure whilst retaining the advantage of quick operation.

Preferably the toggle fastener used in the present invention has an over-centre action. That is to say in contracting the loop and folding the parts of the toggle fastener to a generally parallel condition, the axis of the bail pivot on the lever is taken from one side to the other of a plane containing the axis of pivoting of the lever on the platform and the point of engagement between bail and hook. Such an over-centre action provides a lock against accidental displacement.

Preferably the band is made of particularly thin and flexible material so as to conform to the contour of the object to be clamped. Spring steel is preferred, and this may additionally enable the loop to automatically relax and open when the hasp bail is appropriately positioned.

The engagement between hook and bail may be a permanent connection instead of a releasable one, and the term "hook" is to be interpreted accordingly.

In general there are two alternative possibilities for overlapping the ends of the band. In one possibility the hook or equivalent is provided at the extreme end of the band and the other components of the toggle fastener are mounted near, but not at the opposite end of the band, so that said opposite end can extend and underly the end provided with a hook, or in other words the end provided with a hook overlaps the opposite free end of the band. In the other alternative, the toggle fastener components are mounted on one end of the band and the hook or equivalent is provided near the other of the band but not at it, so that the band portion extending past the hook can overlap or more strictly underly the opposite end of the band which carries the toggle fastener.

The attachment plate on which the lever is mounted may be fixed to a platform extending generally tangentially of the loop on which in one of the possibilities is made out of an end portion of the band. This can be done even when the band is of particularly thin and flexible material by forming the end of the band into a somewhat triangular shape, the three sides of the triangle being composed by a portion of the loop, a platform extending under the attachment plate, and a tie consisting of a final portion of the band extending between the outer end of the platform and the loop at a position say 60 degrees of arc around the loop form the end of the latter which is integral with the platform. The platform may be sandwiched between the attachment plate and a reinforcement located internally of the triangle, the reinforcement abutting the loop at one end, and one end of the tie at the other end, and being in compression. The tie itself is in tension when the band is clamped about an object.

Alternatively the triangular shape may comprise a portion of the loop as a first side, with a stiffer V shaped part fixed to the loop at the free ends of both limbs of the V so as to form the platform and the tie and in this event a reinforcement may be unnecessary.

If the bail is to be permanently attached to the band, the hook may be closed around the bail at the pivotal connection between the two: if releasable the hook could be a generally C shape.

Three embodiments of the invention are now more particularly described with reference to the accompanying drawings wherein:

Figure 1 is an elevation of a first fastener in an open condition;

Figure 2 is a generally similar view of a second fastener in the same open condition:

Figure 3 shows the first fastener in a closed position:

Figure 4 shows the second fastener in a closed position clamped around an object:

Figure 5 is a view similar to figure 4 showing the third fastener in the closed position:

Figure 6 is an enlarged sectional view on the line 6.6 of figure 5.

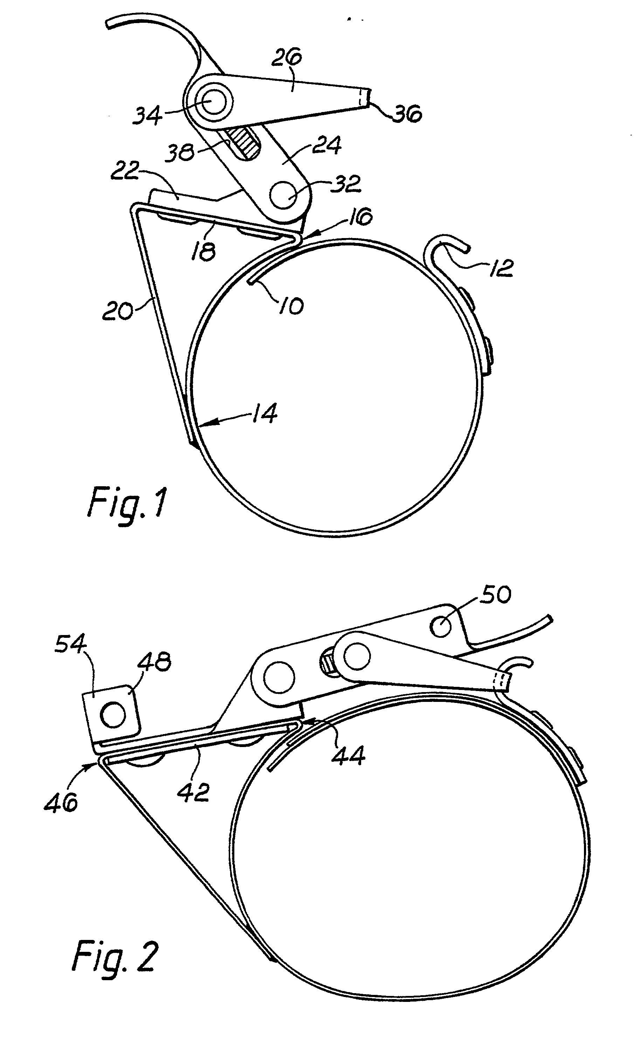

Referring first to Figure 1, a length of thin flexible material is formed into a loop having a first inner end 10, extending beyond a fixed attachment hook 12 (and continuing clockwise) to a second attachment point 14 where it may be rivetted or spot welded to the loop.

A toggle fastener comprises attachment plate 22, lever 24 and hasp bail 26. The latter is generally U shaped to engage over the hook 12.

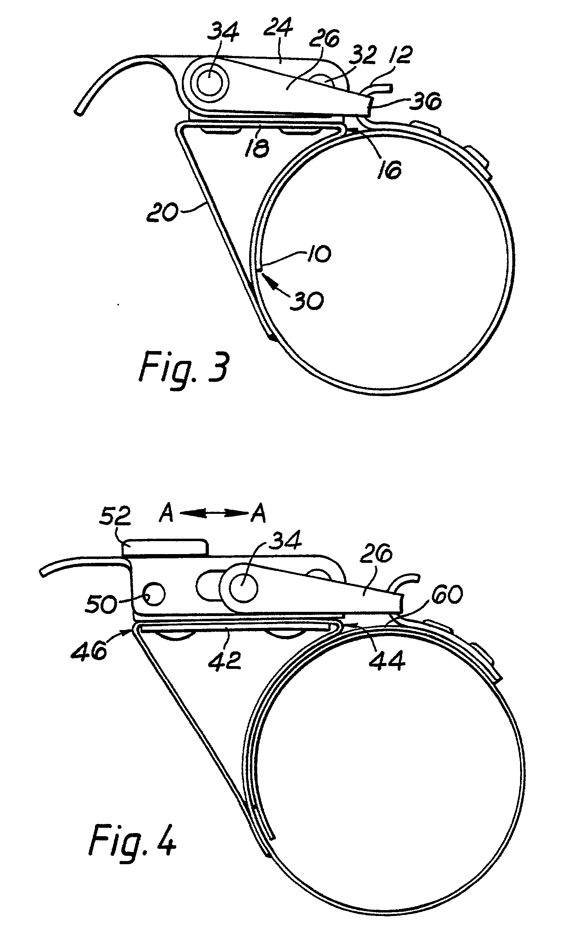

As seen in Figure 3, when the fastener is in the closed condition, the loop ends 10, 16 are substantially overlapped so as to ensure that an object being clamped is engaged about 360 degrees of periphery. Any inequality of pressure in clamping occurs at the zone 30 where there is step owing to the overlapped layers of the band, and the dimension of that step depends upon the thickness of the strip used for the band.

In the figures 1 and 3 illustration, the band is sufficiently thick and rigid to be used as the platform 18 without needing any stiffening on the interior of the triangle formed by the parts 18, 20 and the adjacent band sector.

The lever is pivoted on the axis of pin 32 and the hasp bail on the axis of pivot 34. The third axis is that of the connection of the hasp bail to the hook. It will be noted that in moving from the Figure 1 to Figure 3 position, the axis of pin 32 moves from one side of a plane containing the axes of pin 34 and of the engagement with the hook 36 to the other side of that plane to give the over-centre action previously referred to.

The fastener of Figures 1 and 3 may be adjustable to give different clamping pressures on the same nominal size by making the spacing between the pins 32, 34 variable by use of a screw connecting the two, and with the pin 34 extending in slots 38 in the sides of the lever 24 for that adjustment purpose.

The fastener shown in Figures 2 and 4 is generally similar. It differs particularly in being made from a very much thinner band material so that the platform for the attachment plate of the toggle fastener needs to be stiffened by the component 42 located in the interior of the triangle and in compression between the points 44 and 46 due to the tension applied to the band when it is clamped. In addition the toggle fastener has the refinements of a lug 48 apertured to align with an eye 50 in the side of the lever so that a locking pin or padlock can be inserted to hold the fastener in the locked condition: and a locking catch operated by a member 52 which is slidable in the direction fo the arrows A-A of Figure 4 to engage a hook not shown because it lies between the side walls of the lever in a further locking slot 54 in the lug 48, so as to provide security against accidental operation and release of the fastener.

In making a fastener according to the alternative arrangement described herein, the band would at the end 10 terminate in the vicinity of the hook 12, and for example could be formed directly into the hook instead of using a separate part fixed to the band. The opposite end of the band 16 would then continue in the loop so as to underly the hook.

In the case of Figure 2 and 4 the band is so thin that there is an imperceptible step in the overlapped position giving particularly uniform clamping pressure around the object, and it will be noted that such uniformity will be maintained even if the object is non-circular.

The point 44 may cause a binding or scuffing of the material being clamped as the fastener moves from the Figure 2 position to the Figure 4 position. This may be particularly or even exclusively the case where the band is of particularly thin and flexible material. It is preferred to use particularly thin and flexible material for the band in order to get good clamping even if the object is not truly circular. The binding or scuffing can be reduced by stiffening the thin material of the band by using a thicker shorter stiffening piece 60 as illustrated in Figure2 and 4. Such a piece is however optional and its use, or not, may depend upon the particular application of a fastener. Where it is employed, it will extend over a sufficient length so that it overlaps the point 44 even in the most open position of the fastener possible, i.e. that illustrated in Figure 2. At the opposite end it is conveniently fastened to the hook or like which provides the attachment point which engages with the hasp bail.

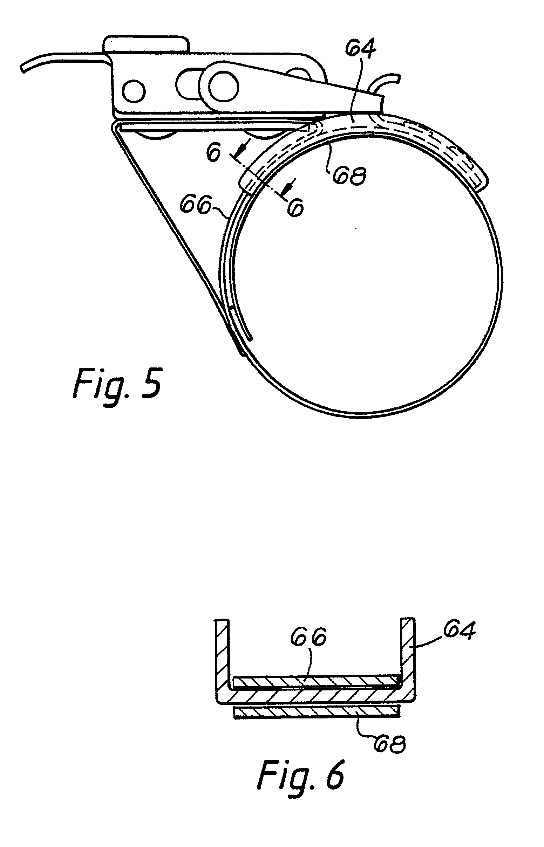

In the third fastener shown in Figures 5-6 the construction is generally the same as in Figures 2 and 4 except that the optional stiffener 60 is replaced by a channel section (and essential) stiffeners 64 which is fixed to the hook and to the flexible band. This channel serves to receive and locate the outer end of the band between its side walls whilst the inner end of the band 68 lies under the end of the channel.

Locating the toggle fastener generally tangentially of the loop ensures that the clamping force provided does not have any distorting effect on the loop causing localised unbalanced pressures.

**Claims**

1. A fastener comprising a looped band and a toggle type fastener (12, 22–26) for contracting the looped band, said toggle type fastener (12, 22–26) having a hook (12) attached near one end of the looped band and a lever (24) and a hasp bail (26) located at an attachment plate (22) which is attached near the other end of the looped band, one end of the looped band overlapping the other end of the looped band, characterised in that the attachment plate (22) is fixed to a platform (18) both lying on a common plane extending generally tangentially of the looped band at the point of the hook (12) in the closed position of the fastener.

2. A fastener as claimed in Claim 1 characterised in that the platform is formed by a portion of the looped band.

3. A fastener as claimed in Claim 2 characterised in that the looped band also extends as a tie strut (20), the tie strut, platform and looped band forming a generally triangular shape.

4. A fastener as claimed in Claim 3 characterised in that the platform (18) is sandwiched between the attachment plate (22) which provides a first pivot (32) for the same, and a reinforcement (42) which extends interiorly of the triangle and abuts the said tie strut and looped band at its ends.

5. A fastener as claimed in Claim 4 characterised in that the reinforcement is in compression between the loop and tie, and in use, the tie is in tension.

6. A fastener as claimed in any preceding claim wherein the looped band is provided with a stiffener towards the end of the looped band opposite to the said platform and said stiffener (64) is of channel section to receive the platform end of the looped band between the sides of the channel.

## Patentansprüche

1. Befestigungsmittel, enthaltend ein schlingenförmiges Band und eine Kipphebeltyp-Befestigungseinrichtung (12, 22–26) zum Zusammenziehen des schlingenförmigen Bandes, wobei die Kipphebeltyp-Befestigungseinrichtung (12, 22–26) einen in der Nähe des einen Endes des schlingenförmigen Bandes angebrachten Haken (12) sowie einen Hebel (24) und einen Überwurfbügel (26) aufweist, die an einer in der Nähe des anderen Endes des schlingenförmigen Bandes angebrachten Befestigungsplatte (22) angeordnet sind, wobei das eine Ende des schlingenförmigen Bandes dessen anderes Ende überlappt, dadurch gekennzeichnet, daß die Befestigungsplatte (22) auf einer Plattform (18) befestigt ist und beide in einer gemeinsamen Ebene liegen, die sich in geschlossener Position des Befestigungsmittels im wesentlichen tangential zum schlingenförmigen Band an der Stelle des Hakens (12) erstreckt.

2. Befestigungsmittel nach Anspruch 1, dadurch gekennzeichnet, daß die Plattform durch einen Teil des schlingenförmigen Bandes gebildet ist.

3. Befestigungsmittel nach Anspruch 2, dadurch gekennzeichnet, daß das schlingenförmige Band sich außerdem als eine Spannstrebe (20) erstreckt, wobei die Spannstrebe, die Plattform und das schlingenförmige Band eine allgemein dreieckige Form bilden.

4. Befestigungsmittel nach Anspruch 3, dadurch gekennzeichnet, daß die Plattform (18) sandwich-artig zwischen der Befestigungsplatte (22), die eine erste Schwenkachse (32) für dieselbe aufweist, und einer Verstärkung (42) angeordnet ist, die sich innerhalb des Dreiecks erstreckt und an der Spannstrebe und dem schlingenförmigen Band an deren Enden anliegt.

5. Befestigungsmittel nach Anspruch 4, dadurch gekennzeichnet, daß die Verstärkung zwischen der Schlinge und der Spannstrebe zusammengepreßt ist und bei Benutzung die Spannstrebe gespannt ist.

6. Befestigungsmittel nach einem der vorhergehenden Ansprüche, dadurch gekennzeichnet, daß das schlingenförmige Band in Richtung auf das der Plattform entgegengesetzte Ende des schlingenförmigen Bandes mit einer Versteifung versehen ist und diese Versteifung (64) von kanalförmigem Querscnitt ist, um das Plattformende des schlingenförmigen Bandes zwischen den Seiten des Kanales aufzunehmen.

## Revendications

1. Attache comprenant une bande en forme de boucle et une fixation de type à genouillère (12, 22–26) permettant de raccourcir la bande en boucle, ladite fixation de type à genouillère (12, 22–26) comprenant un crochet (12) fixé près d'une extrémité de la bande en boucle et un levier (24) et une anse articulée (26) disposée sur une plaque de fixation (22) qui est fixée près de l'autre extrémité de la bande en boucle, une extrémité de la bande en boucle, une extrémité de la bande en boucle recouvrant l'autre extrémité de la bande en boucle, caractérisée en ce que la plaque de fixation (22) est solidaire d'une plate-forme (18) situées toutes les deux sur un plan commun s'étendant sensiblement tangentiellement par rapport à la bande en boucle au niveau du point du crochet (12) en position de fermeture de l'attache.

2. Attache selon la revendication 1, caractérisée en ce que la plate-forme est constituée d'une portion de la bande en boucle.

3. Attache selon la revendication 2, caractérisée en ce que la bande en boucle s'étend en outre sous forme de tirant (20), le tirant, la plate-forme et la bande en boucle constituant un ensemble de forme sensiblement triangulaire.

4. Attache selon la revendication 3, caractérisée en ce que la plate-forme (8) est prise en sandwich entre la plaque de fixation (22) qui fournit un premier pivot (32) de celle-ci, et un renforcement (42) qui s'étend à l'intérieur du triangle et entre en butée contre le tirant et la bande en boucle par ses extrémités.

5. Attache selon la revendication 4, caractérisée en ce que le renforcement est en compression entre la boucle et le tirant et, en service, le tirant est en tension.

6. Attache selon l'une quelconque des revendications précédentes, caractérisée en ce que la bande en boucle est pourvue d'un raidisseur vers l'extrémité de la bande en boucle opposée à ladite plate-forme et ledit raidisseur (64) présente une section en U destinée à recevoir l'extrémité côté plate-forme de la bande en boucle entre les branches de l'U.

*Fig.1*

*Fig. 2*

Fig. 3

Fig. 4

*Fig. 5*

*Fig. 6*